# EUROPÄISCHE PATENTSCHRIFT

(11) **EP 2 410 079 B1**
(45) Veröffentlichungstag und Bekanntmachung des Hinweises auf die Patenterteilung: **27.06.2018**
(21) Anmeldenummer: 11174285.4
(22) Anmeldetag: 15.07.2011
(51) Int. Cl.: C25B 11/03, H01M 4/86

(54) **Sauerstoffverzehrelektrode**
Oxygen-consuming electrode
Electrode catalytique consommant de l'oxygène

(30) Priorität: 20.07.2010 DE 102010031571
(43) Veröffentlichungstag der Anmeldung: 25.01.2012
(73) Patentinhaber: Covestro Deutschland AG, 51373 Leverkusen (DE)
(72) Erfinder: Bulan, Andreas, 40764 Langenfeld (DE); Weber, Rainer, 51519 Odenthal (DE)
(74) Vertreter: Levpat

(56) Entgegenhaltungen:
- EP-A2- 0 141 142
- JP-A- H11 172 480
- US-A- 6 001 226

## Beschreibung

Die Erfindung betrifft eine Sauerstoffverzehrelektrode, insbesondere für den Einsatz in der Chloralkali-Elektrolyse mit einer Katalysatorbeschichtung.. Die Erfindung betrifft ferner ihre Verwendung in der Chloralkali-Elektrolyse oder in Brennstoffzellen.
Die Erfindung geht aus von an sich bekannten Sauerstoffverzehrelektroden, die als flächige Gasdiffusionselektroden ausgebildet sind und üblicherweise einen elektrisch leitenden Träger und eine Gasdiffusionsschicht mit einer katalytisch aktiven Komponente umfassen.
Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff-entwickelnde Kathode der Elektrolyse (beispielsweise in der Chloralkali-Elektrolyse) durch die Sauerstoffverzehrelektrode (Kathode) zu ersetzen. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.
Die Sauerstoffverzehrelektrode - im folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.-% und gegenüber reinem Sauerstoff bei einer Temperatur von typischerweise 80 - 90 °C. Ebenso wird ein hohes Maß an mechanischer Stabilität gefordert, dass die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators Geeignete hydrophobe und hydrophile Poren und eine entsprechende Porenstruktur zur Leitung von Gas und Elektrolyt sind ebenso notwendig, wie eine Dichtigkeit, so dass Gas- und Flüssigkeitsraum voneinander getrennt bleiben. Die Langzeitstabilität und geringe Herstellkosten sind weitere besondere Anforderungen an eine technisch nutzbare Sauerstoffverzehrelektrode.
Eine weitere Entwicklungsrichtung zur Nutzung der SVE-Technologie in der Chlor-Alkali-Elektrolyse ist die Ionenaustauschermembran, die in der Elektrolysezelle den Anoden- vom Kathodenraum trennt, ohne Natronlaugespalt direkt auf die SVE aufzulegen. Diese Anordnung wird auch als zero gap Anordnung im Stand der Technik bezeichnet. Diese Anordnung wird üblicherweise auch in der Brennstoffzellen-Technologie angewandt. Nachteilig hierbei ist, dass die sich bildenden Natronlauge durch die SVE zur Gasseite geleitet werden muss und anschließend an der SVE nach unten fließt. Hierbei darf es nicht zu einer Verstopfung der Poren in der SVE durch die Natronlauge oder zu Auskristallisation von Natronlauge in den Poren kommen. Es hat sich herausgestellt, dass hierbei auch sehr hohe Natronlauge-Konzentrationen entstehen können, wobei die Ionenaustauschermembran gegen diese hohen Konzentrationen nicht langzeitstabil ist (Lipp et al, J. Appl. Electrochem. 35 (2005)1015 - Los Alamos National Laboratory "Peroxide formation during chlor-alkali electrolysis with carbon-based ODC").

Eine herkömmliche Sauerstoffverzehrelektrode besteht typischerweise aus einem elektrisch leitenden Trägerelement, auf das die Gasdiffusionsschicht mit einer katalytisch aktiven Komponente aufgebracht ist. Als hydrophobe Komponente wird in der Regel Polytetrafluorethylen (PTFE) eingesetzt, welches zudem als polymerer Binder des Katalysators dient. Bei Elektroden mit Silber-Katalysator dient das Silber als hydrophile Komponente. Bei kohlenstoffgeträgerten Katalysatoren wird als Träger ein Kohlenstoff mit hydrophilen Poren eingesetzt, durch welche der Flüssigkeitstransport erfolgen kann.

Die Reduktion des Sauerstoffs erfolgt in einem Dreiphasenbereich, in welchem Gasphase, Flüssigkeitsphase und fester Katalysator zusammentreffen.

Der Gastransport erfolgt durch die Poren in der hydrophoben Matrix. Die hydrophilen Poren füllen sich mit Flüssigkeit, über sie erfolgte der Transport des Wassers zu und der Hydroxid-Ionen von den katalytischen Zentren. Da sich Sauerstoff nur begrenzt in der wässrigen Phase löst, müssen genügend wasserfreie Poren zum Transport des Sauerstoffs zur Verfügung stehen.

Als Katalysator für die Reduktion von Sauerstoff sind eine Vielzahl von Verbindungen beschrieben.

So liegen Berichte über den Einsatz von Palladium, Ruthenium, Gold, Nickel, Oxiden und Sulfiden von Übergangsmetallen, Metall-Porphyrinen und Phthalocyaninen, und Perovskiten als Katalysator für Sauerstoffverzehrelektroden vor.

Praktische Bedeutung als Katalysator für die Reduktion von Sauerstoff in alkalischen Lösungen haben davon jedoch nur Platin und Silber erlangt.

Platin besitzt eine sehr hohe katalytische Aktivität für die Reduktion von Sauerstoff. Wegen der hohen Kosten von Platin wird dieses ausschließlich in geträgerter Form eingesetzt. Bevorzugtes Trägermaterial ist Kohlenstoff. Kohlenstoff leitet elektrischen Strom zu dem Platin-Katalysator. Die Poren in den Kohlenstoff-Partikeln lassen sich durch Oxidation der Oberflächen hydrophil einstellen und werden hierdurch geeignet für den Transport von Wasser. SVEs mit kohlenstoffgeträgerten Platin-Katalysatoren zeigen eine gute Leistung. Die Beständigkeit kohlenstoffgeträgerter Platinelektroden im Dauerbetrieb ist jedoch unzureichend, vermutlich, weil durch Platin auch die Oxidation des Trägermaterials katalysiert wird. Kohlenstoff begünstigt zudem die unerwünschte Bildung von H₂O₂.

Es sind SVE mit einem Platingehalt von 5 g/m² bis 50 g/m² beschrieben. Trotz der niedrigen Konzentration sind die Kosten für den Platin-Katalysator immer noch so hoch, dass diese einem technischen Einsatz entgegenstehen.

Silber hat ebenfalls eine hohe katalytische Aktivität für die Reduktion von Sauerstoff.

SVE mit kohlenstoffgeträgertem Silber weisen üblicherweise Silber-Konzentrationen von 20 - 50 g/m² auf. Obwohl die kohlenstoffgeträgerten Silberkatalysatoren haltbarer sind als die entsprechenden Platin-Katalysatoren, ist die Langzeitstabilität unter den Bedingungen in einer der Sauerstoffverzehrelektrode, insbesondere im Einsatz für die Chlor-Alkali-Elektrolyse beschränkt.

Verschiedene Veröffentlichungen beschreiben die Herstellung von Katalysatoren auf Basis von Silber auf Polytetraflourethylen (PTFE). Ein solches Verfahren ist zum Beispiel in EP0115845B1 beschrieben.

In der Patentschrift US 7566388 B2 wird ein Katalysator beschrieben, welcher durch Fällung und Reduktion eines Edelmetalls sowie des Oxid eines Selten-Erde-Metalls in Kombination mit einem Erdalkalimetall-Oxid auf einen Träger hergestellt werden. Durch diese Kombination wird eine höhere Aktivität des Katalysators erreicht. Als Trägermaterial wird Kohlenstoff eingesetzt, welches die Beständigkeit dieser Katalysatoren einschränkt.

Bei der Herstellung von SVE mit ungeträgertem Silber-Katalysator kann das Silber zumindest teilweise in Form von Silberoxiden eingebracht werden, welche dann zu metallischem Silber reduziert werden. Die Reduktion erfolgt entweder bei der Inbetriebnahme der Elektrolyse, in welcher bereits Bedingungen für eine Reduktion von Silberverbindungen bestehen, oder in einem gesonderten Schritt durch vorzugsweise elektrochemische Weise.

Im großtechnischen Einsatz mit sich wiederholenden An- und Abschaltvorgängen kommt es nach dem Abschalten des Elektrolysestroms zur teilweisen Oxidation des Silbers zu Silberoxid Das sich gebildete Silberoxid kann sich z.B. von der Oberfläche lösen und das Porensystem der SVE verstopfen. Dies führt bei Silberkatalysatoren mit besonders feiner Morphologie wie zum Beispiel nanoskaligem Silber, über die Zeit zu einer Verschlechterung der Leistung. WO200803696A2 lehrt, wie durch Einschluss von in situ erzeugten Zirkoniumdioxid- Partikeln in den Poren von nanoskaligem Silber die Langzeitstabilität von nanoskaligen Silberkatalysatoren deutlich verbessert werden kann. Das Verfahren zur Herstellung dieser Katalysatoren ist jedoch aufwändig und erfordert den Einsatz von nanaoskaligem Silber, welches ebenfalls nur mit hohem Aufwand herzustellen ist,

Bei der Herstellung von Sauerstoffverzehrelektroden mit ungeträgertem Silberkatalysatoren lässt sich prinzipiell zwischen trockenen und nassen Fertigungsverfahren unterscheiden.

Bei den trockenen Verfahren wird ein Gemisch aus Katalysatoren und polymerer Komponente mit einem Mischer, der schnell laufende Schlagwerkzeuge aufweist zur einer Mischung verarbeitet, die auf das elektrisch leitende Trägerelement aufgebracht und bei Raumtemperatur verpresst wird. Ein solches Verfahren ist in EP 1728896 A2 beschrieben. Das in EP 1728896 beschriebene Vorprodukt besteht aus 3 - 15 Teilen PTFE, 70-95 Teilen Silberoxid und 0-15 Teilen Silber-Metall-Pulver.

Bei den nassen Fertigungsverfahren wird ein Vorprodukt in Form einer Paste oder einer Suspension enthaltend feine Silberpartikeln und eine polymere Komponente verwendet. Als Suspensionsmittel wird in der Regel Wasser verwendet, es können aber auch andere Flüssigkeiten wie Alkohole oder deren Gemische mit Wasser verwendet werden. Bei der Herstellung der Pasten oder Suspension können oberflächenaktive Substanzen zugegeben werden, um deren Stabilität zu erhöhen. Die Pasten werden mittels Siebdruck oder Kalandrieren auf das Trägerelement aufgebracht, während die weniger viskosen Suspensionen üblicherweise auf das Trägerelement aufgesprüht werden. Nach der Trocknung erfolgt bei Temperaturen im Bereich des Schmelzpunktes des Polymers die Sinterung. Hierbei werden die zugesetzten Hilfsmittel wie Emulgatoren oder Verdickungsmittel entfernt. Ein solches Verfahren wird zum Beispiel in US20060175195 A1 beschrieben. Das Verhältnis von PTFE zu Silber in dem Vorprodukt entspricht dem beim trockenen Verfahren üblichen Verhältnis.

Die in den vorab beschriebenen SVE mit ungeträgerten Silber-Katalysatoren weisen unter den Bedingungen der Elektrolyse von Alkali-Chloriden eine gute Langzeitstabilität auf. Nachteilig ist jedoch der hohe Silberanteil von 1.000 bis 2.500 g/m².

Aus der JP11172480 ist eine Kombination von Ionenaustauschermembran mit Gasdiffusionselektrode bekannt geworden, bei der eine flüssigkeitsdurchlässige Zwischenschicht vorgesehen ist, die zur Aufnahme eines Katholyt dient. Die geeigneten Materialien für die Zwischenschicht umfassen unter anderem verschiedene Metalloxide. Eine Verwendung von Metalloxiden als zusätzliches Füllmaterial in der Gasdiffusionselektrode wird nicht offenbart.

Die EP141142 A2 offenbart die Herstellung einer Elektrode durch Aufbringung einer zusätzlichen Oxidschicht auf eine eigentliche Katalysator enthaltende hydrophobe Schicht. Hierbei ist nicht vorgesehen das beispielhaft genannte Titanoxid in der gleichen Schicht vorzusehen wie das Silber, das gemäß der EP141142 A2 einen bevorzugten Elektrokatalysator bildet. Das Titanoxid dient gemäß der Lehre von EP141142 A2 also als Material für eine zusätzliche inerte Beschichtung und nicht als inertes Füllmaterial innerhalb der elektroaktiven Schicht einer Elektrode.

Aus der Schrift US 6001226A ist eine elektrochemische Zelle bekannt geworden, die für die Chlor-Alkali-Elektrolyse geeignet sein soll. Unter anderem werden zahlreiche Metalle, Metalllegierungen und Metalloxide genannt, die als Elektrokatalysatoren für Anoden und Kathoden in Frage kommen sollen. Besonders geeignete Materialien werden nicht genannt. Die Anwendung von speziellem Füllmaterial als Ersatz für Edelmetall-Katalysator wird nicht erwähnt.

Silber ist ein selten vorkommendes Element, sein Anteil an der Erdkruste beträgt nur 0,08 ppm. Silber ist ein begehrtes Metall für Schmuck und eine Vielzahl von technischen Anwendungen. Die beschränkte Zugänglichkeit und die hohe Nachfrage resultieren in einen hohen Preis von Silber. Für die SVE mit ungeträgerten Silberkatalysatoren ergeben sich hiermit hohe Kosten, welche einem wirtschaftlichen Einsatz der SVE-Technologie entgegenstehen.

Die Aufgabe der vorliegenden Erfindung besteht darin, eine Sauerstoffverzehrelektrode, insbesondere für den Einsatz in der Chloralkali-Elektrolyse, bereitzustellen, welche bei einem verringerten Silbergehalt die mindestens gleiche Leistung und Langzeitstabilität wie eine herkömmliche SVE aufweist.

Die Aufgabe wird gelöst durch eine Sauerstoffverzehrelektrode, bei welcher Teile des Silbers durch Füllstoffpartikel ersetzt werden die elektrisch schlecht leitend sind und eine spezifische Partikelgröße (Durchmesser) aufweisen.

Gegenstand der Erfindung ist eine Sauerstoffverzehrelektrode, mindestens aufweisend einen Träger in Form eines Flächengebildes und eine Beschichtung mit einer Gasdiffusionsschicht und einer katalytisch aktiven Komponente, dadurch gekennzeichnet, dass die Beschichtung mindestens ein fluorhaltiges Polymer, Silber in Form von Silberpartikeln oder einer reduzierbaren Silberverbindung, und ein hydrophiles, elektrisch nicht oder schlecht leitendes gegenüber Natronlauge von ca. 32 Gew.-% und gegenüber reinem Sauerstoff bei einer Temperatur von typischerweise 80 - 90 °C alkalilaugenbeständiges Füllmaterial mit einem mittleren Partikeldurchmesser (d(0,5) volumenspezifisch) im Bereich von 5 bis 200 µm enthält, wobei die elektrische Leitfähigkeit des alkalilaugenbeständigen Füllmaterials < 1000 S/cm beträgt und der Partikeldurchmesser mit Laserdiffraktion analog ISO 13320 bestimmt ist, wobei das fluorhaltige Material, die katalytisch aktive Komponente und das Füllmaterial als Gemisch vorliegen und wobei als Füllmaterial Zirkonoxid ausgewählt ist und der Anteil an Zirkonoxid als Füllmaterial maximal dem Anteil des Silbers entspricht.

Bevorzugt beträgt der mittlere Partikeldurchmesser des Füllmaterials 10 bis 150 µm.

Bevorzugt umfasst die Beschichtung 0,5 bis 20 Gewichtsteile, bevorzugt 2 bis 10 Gewichtsteile des fluorhaltigen Polymers, 30 bis 90 Gewichtsteile, bevorzugt 30 bis 70 Gewichtsteile Silber in Form von Silberpartikeln und/oder einer reduzierbaren Silberverbindung, und 5 bis 60 Gewichtsteile, bevorzugt 15 bis 50 Gewichtsteile des hydrophilen, elektrisch nicht oder schlecht leitenden alkalilaugenbeständigen Füllmaterials.

Das Füllmaterial ersetzt einen Teil des katalytisch wirkenden Silbers, es muss jedoch selber nicht katalytisch aktiv sein. Das Füllmaterial ist insbesondere wie das Silber hydrophil, das Verhältnis von hydrophobem und hydrophilem Anteil in der Elektrode wird durch das Füllmaterial nicht wesentlich verändert. Das Füllmaterial liegt in Form diskreter Partikel vor und sollte mit dem katalytisch wirkenden Silber insbesondere keine chemische Verbindung oder Legierung eingehen. Die mittlere Partikelgröße (Korndurchmesser) des Füllmaterials liegt bevorzugt mit mindestens 10 µm in der Größenordung oder oberhalb der Partikelgröße der Silberhaltigen-Katalysatoren. Das Füllmaterial ist elektrisch nicht leitend oder schlecht leitend. Die Leitfähigkeit des Füllmaterials beträgt besonders bevorzugt < 100 Siemens/cm.

Zirkoniumoxid in verschiedenen Partikelgrößen ist leicht zugänglich und ein gängiger Ausgangsstoff für technische Keramiken und hochtemperaturbeständige Bauteile. Zirkoniumoxid besitzt keine katalytische Aktivität in Bezug auf die elektrolytische Reduktion von Sauerstoff. Im Temperaturbereich der Anwendung von SVE ist Zirkoniumoxid elektrisch nicht leitend. Überraschenderweise kann Zirkoniumoxid trotz der nicht vorhandenen katalytischen Aktivität bis zu 50 % des Silbers in einer SVE ersetzen, ohne dass sich die Leistung der SVE verringert.

Besonders bevorzugt wird ein Zirkoniumoxid eingesetzt, bei dem die Partikelgröße einerseits mit d (0,1) > 10 µm, und andererseits mit d (0,9) < 150 µm (Angaben in Volumenprozent Q3) eingegrenzt ist..

Die Herstellung der SVE aus dem Vorprodukt kann erfolgen mit den an sich bekannten Techniken aus den entsprechenden Suspensionen, Pasten oder Pulvermischungen im Nass- oder Trockenverfahren.

Die im Nassverfahren eingesetzte wässrige Suspension oder Paste wird beispielsweise aus feinteiligem Silber, einer fluorhaltigen Polymer enthaltenden Suspension (Polymer: zum Beispiel PTFE) und gegebenenfalls einem Verdicker (zum Beispiel Methylcellulose) und einem Emulgator durch Mischen der Komponenten mit einem hochtourigen Mischer hergestellt. Hierzu wird zuerst aus feinteiligem Silber, dem Füllmaterial, und gegebenenfalls einem Verdicker (zum Beispiel Methylcellulose) eine Suspension in Wasser und/oder Alkohol hergestellt. Diese Suspension wird dann mit einer Suspension eines fluorhaltigen Polymers, wie sie zum Beispiel dem Bezeichnung Dyneon™ TF5035R im Handel erhältlich ist, zu einem erfindungsgemäßen Vorprodukt vermischt. Das Vorprodukt in Form einer Emulsion oder Paste wird dann nach bekannten Verfahren auf einen Träger aufgebracht, getrocknet, kann dann optional verdichtet werden und wird dann gesintert.

Das im Trockenverfahren beispielsweise eingesetzte Vorprodukt in Form einer Pulvermischung wird hergestellt durch Mischen unter Einsatz schnell laufender Schlagwerkzeuge eines Gemisches aus PTFE oder einem anderen fibrillierbaren, chemisch beständigen Polymers, und Silberoxid-Partikeln und/oder Silberpartikeln. Beispielsweise kann der Mischprozess in zwei oder mehreren Schritten erfolgen. Dabei kann zwischen den Mischschritten das Material gesiebt werden, um noch vorhandene größere Partikel und Agglomerate aus dem Mischprozess zu entfernen. In einer weiteren Variante kann das Pulvergemisch in einem Zwischenschritt kompaktiert werden, zum Beispiel mittels eines Kalanders, und die so erhaltenen Schülpen erneut zu einem Pulver in einem Mischer aufgearbeitet werden. Auch dieser Vorgang kann prinzipiell mehrmals wiederholt werden. Bei den Mahlvorgängen ist jeweils darauf zu achten, dass die Temperatur der Mischung in einem Bereich von 35 bis 80 °C, bevorzugt von 40 bis 55 °C gehalten wird.
Der Mischung wird dann beispielsweise ein Zirkoniumdioxid mit der oben beschriebenen Partikelgröße zugegeben.
Die Zugabe kann zu Beginn des Mischvorgangs erfolgen. Es können alle Komponenten zusammen gemahlen werden, indem zum Beispiel den Mischer mit einem Gemisch der Komponenten hydrophobes Polymer, Silber und/oder Silberoxid und dem Füllmaterial beaufschlagt wird.
Bei einer mehrstufigen Mischung mit zwischenzeitlicher Siebung und gegebenenfalls Kompaktierung kann das Füllmaterial aber auch zwischen zwei Mischvorgängen zugemischt werden.
Die Pulvermischung wird dann in bekannter Weise auf einen Träger aufgebracht und verdichtet.

Neben dem genannten Zirkoniumdioxid gibt es eine Vielzahl von weiteren Stoffen, welche als Füllmaterial für die erfindungsgemäßen Vorprodukte und die daraus hergestellten SVE verwendet werden können.
Insbesondere geeignet sind zum Beispiel alkalibeständige Metalloxide wie TiO₂, Fe₂O₃, Fe₃O₄, NiO₂, Y₂O₃, Mn₂O₃, Mn₅O₈, WO₃, CeO₂ und weitere Oxide seltener Erden, als auch Metallmischoxide wie Rutile, Spinelle COAl₂O₄, Co(AlCr)₂O₄, inverse Spinelle, (Co,Ni,Zn)₂(Ti,Al)O₄, Perowskite wie LaNiO₃, ZnFe₂O₄ (Pigment Gelb 119), Cu(FeCr)₂O₄. Ebenfalls geeignet sind Bornitrid, Siliziumnitrid und andere Metallnitride wie TiN, AlN, sowie diamant- und metallartige Carbide wie Siliciumcarbid, TiC, CrC, WC, Cr₃C₂, TiCN.
Die genannten Füllmaterialien können in Kombination von zwei oder mehr Komponenten eingesetzt werden.

Bevorzugt ist eine Sauerstoffverzehrelektrode, bei der als Füllmaterial Zirkonoxidoder ein Gemisch von Zirkonoxid und Wolframoxid ausgewählt ist.

Die zugegebenen Füllmaterialien können auch gegebenenfalls katalytisch wirksam sein. In den aus den oben genannten Ausgangsprodukten hergestellten SVE erfolgt die Reduktion des Sauerstoffs in erster Linie an den Silberkatalysatoren. Die Katalyse kann durch die Füllmaterialien unterstützt werden.

Während die Zusammensetzung der Füllmaterialien von untergeordneter Bedeutung ist, sofern die Materialien unter den Bedingungen einer Sauerstoffverzehrelektrode langzeitstabil sind, hat die Partikelgröße großen Einfluss auf die Leitungsfähigkeit der SVE. Es hat sich gezeigt, dass bei der Anwesenheit einer großen Anzahl von Partikeln mit einem Durchmesser von < 1 µm die Leistungsfähigkeit der SVE deutlich verringert wird. Größere Partikel für sich bewirken in gewissem Maße keine Verschlechterung der Leistungsfähigkeit der SVE, es ist aber einsichtlich, dass große Partikel das Volumen der verfügbaren Katalysatorschicht verringern. Die Partikel sollten in einem angemessenen Verhältnis zu der Dicke der Elektrode und der Maschenweite des Trägerelements stehen, wodurch sich Begrenzungen für die maximalen Partikelgrößen ergeben. Bei einer Maschenweite des Trägerelements von beispielsweise 500 µm sollte die maximale Partikelgröße des Füllmaterials die halbe Maschenweite nicht überschreitet, wobei der Anteil der Partikel > 250 µm kleiner 50 % sein sollte. Entsprechendes gilt auch für bei der Betrachtung der Elektrodendicke im Verhältnis zum Partikeldurchmesser. So sollte bei einer Elektrodendicke von 600 µm die maximale Partikelgröße des Füllmaterials 50 % der Elektrodendicke nicht überschreitet, ebenfalls sollte dabei der Anteil der Partikel mit einem Durchmesser von mehr als 200 µm kleiner 50 % sein.

Besonders bevorzugt ist eine Sauerstoffverzehrelektrode, bei der der Feinanteil des Füllmaterials mit einem Partikeldurchmesser von < 4µm höchstens 20 %, bevorzugt höchstens 15 %, besonders bevorzugt höchstens 10 % beträgt.

Besonders bevorzugt ist auch eine Sauerstoffverzehrelektrode, bei der der Feinanteil des Füllmaterials mit einem Partikeldurchmesser von < 1 µm höchstens 10 %, bevorzugt höchstens 5 %, besonders bevorzugt höchstens 2 % beträgt.

(Alle Partikelgrößen sind nach Ultraschallbehandlung mit Laserdiffraktion analog ISO 13320 zu messen. Die Angaben erfolgen kummulativ in Volumenprozent, Q₃)

Ein Teil der als Füllmaterialien geeigneten Materialien Verbindungen wird auch für Keramiken, Oberflächenbeschichtungen und/oder Pigmente eingesetzt und steht großtechnisch zur Verfügung.

Die erfindungsgemäßen Sauerstoffverzehrelektroden können beispielsweise eingesetzt werden in der Chlor-Alkali-Elektrolyse in Zellen mit einem Laugespalt zwischen Sauerstoffverzehrelektrode und Ionenaustauschermembran oder in direktem Kontakt mit der Ionenaustauschermembran oder in Zellen in im Spalt zwischen Ionenaustauschermembran und Sauerstoffverzehrelektrode ein hydrophiles Material vergleichbar der in US 6117286 A1 beschriebenen Elektrode aufweisen.

Die erfindungsgemäße Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Alternativ kann die erfindungsgemäße Sauerstoffverzehrelektrode bevorzugt als Kathode in einer alkalischen Brennstoffzelle geschaltet werden.

Weiterer Gegenstand der Erfindung ist daher die Verwendung der erfindungsgemäßen Sauerstoffverzehrelektrode zur Reduktion von Sauerstoff im Alkalischen,, insbesondere als Sauerstoff verzehrende Kathode in der Elektrolyse, insbesondere in der Chloralkalielektrolyse, oder als Elektrode in einer Brennstoffzelle oder als Elektrode in einer Metall/Luft-Batterie.

Die erfindungsgemäß hergestellte SVE wird besonders bevorzugt bei der Chlor-Alkali-Elekrolyse und hier insbesondere bei der Natriumchlorid-(NaCl)-Elektrolyse eingesetzt.

Ferner ist Gegenstand der Erfindung eine Elektrolysevorrichtung, insbesondere für die Chloralkalielektrolyse, aufweisend eine neue zuvor beschriebene Sauerstoffverzehrelektrode als Sauerstoff verzehrende Kathode.

Die Erfindung wird nachfolgend anhand durch die Beispiele, welche jedoch keine Beschränkung der Erfindung darstellen, näher erläutert.

### Beispiele

### Beispiel 1

1,472 kg einer Pulvermischung, bestehend aus 5 Gew.-% PTFE-Pulver Dyneon Typ TF2053Z, 61,6 Gew.-% Silber-I-Oxid, 7 Gew.-% Silberpulver des Typs 331 der Fa. Ferro und 26,4 Gew.-% Zirkoniumdioxid (Hersteller: Fa. Merck Chemicals, Technipur, Mittlere Partikelgröße (d (0,5), Volumenprozent) 22 µm, d (0,1) 15 µm, d (0,9) 32,5 µm), wurden in einem Mischer der Fa. Eirich, Typ R02, ausgerüstet mit einem Sternwirbler als Mischelement, bei einer Drehzahl von 5000 U/min über 3,5 Minuten gemischt. Die Temperatur der Pulvermischung blieb während des Vorgangs unter 48°C.

Nach dem Mischen wurde die Pulvermischung mit einer Maschenweite von 1,0 mm gesiebt.

Die gesiebte Pulvermischung wurde anschließend auf ein Netz aus Nickeldrähten mit einer Drahtdicke von 0,14 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,58 kN/cm verpresst. Der Walzenpresse wurde die Gasdiffusionselektrode entnommen.

Die so hergestellte Sauerstoffverzehrkathode wurde bei der Elektrolyse einer Natriumchlorid-Lösung mit einer Ionenaustauschermembran von DuPONT N982WX und einem Natronlaugespalt zwischen SVE und Membran von 3 mm eingesetzt. Als Anode wurde eine Titan-Anode bestehend aus einem Steckmetall mit einem handelsüblichem DSA® Coating der Fa. Denora eingesetzt. Die Zellspannung bei einer Stromdichte von 4 kA/m², einer Elektrolyttemperatur von 90 °C, und einer Natronlauge-Konzentration von 32 Gew.-% betrug 2,05 V.

### Beispiel 2

2 kg einer Pulvermischung, bestehend aus 5 Gew.-% PTFE-Pulver Dyneon Typ TF2053Z, 44,0 Gew.-% Silber-I-Oxid, 7 Gew.-% Silberpulver des Typs 331 der Fa. Ferro und 44,4 Gew.-% Zirkoniumdioxid (Fa. Merck Chemicals, Technipur, Mittlere Partikelgröße (d (0,5), Volumenprozent), 22 µm, d (0,1) 15 µm, d (0,9) 32,5 µm), wurden in einem Mischer der Fa. Eirich, Typ R02, ausgerüstet mit einem Sternwirbler als Mischelement, bei einer Drehzahl von 5000 U/min über 5 Minuten gemischt. Die die Temperatur der Pulvermischung blieb während des Vorgangs unter 41°C.
Nach dem Mischen wurde die Pulvermischung mit einer Maschenweite von 1,0 mm gesiebt.
Die gesiebte Pulvermischung wurde anschließend auf ein Netz aus Nickeldrähten mit einer Drahtdicke von 0,14 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,63 kN/cm verpresst. Der Walzenpresse wurde die Gasdiffusionselektrode entnommen.
Die so hergestellte Sauerstoffverzehrkathode wurde bei der Elektrolyse einer Natriumchlorid-Lösung mit einer Ionenaustauschermembran von DuPONT N982WX und einem Natronlaugespalt zwischen SVE und Membran von 3mm eingesetzt. Als Anode wurde eine Titan-Anode bestehend aus einem Steckmetall mit einem handelsüblichem DSA® Coating der Fa. Denora eingesetzt Die Zellspannung bei einer Stromdichte von 4 kA/m², einer Elektrolyttemperatur von 90° C, und einer Natronlauge-Konzentration von 32 Gew.-% betrug 2,22 V.

### Beispiel 3 (Vergleichsbeispiel)

0,16 kg einer Pulvermischung, bestehend aus 5 Gew.-% PTFE-Pulver Dyneon Typ TF2053Z, 61,6 Gew.-% Silber-I-Oxid, 7 Gew.-% Silberpulver des Typs 331 der Fa. Ferro und 26,4 Gew.-% Wolframoxid WO3 Gelb HQ (der Firma H.C. Starck, Mittlere Partikelgröße (d (0,5), Volumenprozent) 71 µm, d (0,1) 31 µm, d (0,9) 133 µm, Anteil < 10 µm kleiner 3 %, Anteil > 1 µm kleiner 1 %), wurden in einem Mischer der Fa. IKA in 4 Intervallen zu je 15 Sekunden gemischt. Die die Temperatur der Pulvermischung blieb während des Vorgangs unter 49 °C. Nach dem Mischen wurde die Pulvermischung mit einer Maschenweite von 1,0 mm gesiebt..
Die gesiebte Pulvermischung wurde anschließend auf ein Netz aus Nickeldrähten mit einer Drahtdicke von 0,14 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,55 kN/cm verpresst. Der Walzenpresse wurde die Gasdiffusionselektrode entnommen.
Die so hergestellte Sauerstoffverzehrkathode wurde bei der Elektrolyse einer Natriumchlorid-Lösung mit einer Ionenaustauschermembran von DuPONT N982WX und einem Natronlaugespalt zwischen SVE und Membran von 3mm eingesetzt. Die Zellspannung bei einer Stromdichte von 4 kA/m², einer Elektrolyttemperatur von 90° C, und einer Natronlauge-Konzentration von 32 Gew.-% betrug 2,13 V.

### Beispiel 4 (Vergleichswert / SVE mit zu feinem Füllmaterial)

0,16 kg einer Pulvermischung, bestehend aus 5 Gew.-% PTFE-Pulver Dyneon Typ TF2053Z, 61,6 Gew.-% Silber-I-Oxid, 7 Gew.-% Silberpulver des Typs 331 der Fa. Ferro und 26,4 Gew.-% Zirkonoxid der Fa. HC.Starck, StarCeram Z16® (mittleren Partikelgröße (d (0,5), Volumenprozent) 4,1 µm, d (0,1) 0,3 µm, d (0,9) 16 µm, und einem Anteil < 1 µm von 40 %), wurden in einem Mischer der Fa. IKA 4 mal für je 15 sec gemischt. Die die Temperatur der Pulvermischung blieb während des Vorgangs unter 43°C.

Nach dem Mischen wurde die Pulvermischung mit einer Maschenweite von 1,0 mm gesiebt.

Die gesiebte Pulvermischung wurde anschließend auf ein Netz aus Nickeldrähten mit einer Drahtdicke von 0,14 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,49 kN/cm verpresst. Der Walzenpresse wurde die Gasdiffusionselektrode entnommen.

Die so hergestellte Sauerstoffverzehrkathode wurde bei der Elektrolyse einer Natriumchlorid-Lösung mit einer Ionenaustauschermembran von DuPONT N982WX und einem Natronlaugespalt zwischen SVE und Membran von 3mm eingesetzt. Die Elektrolyttemperatur betrug 90° C, die Natronlauge-Konzentration von 32 Gew.-%.

Bei einer Spannung von etwas über 2,48 Volt floss kurzfristig ein Elektrolysestrom von 15 A, dies entspricht 1,5 kA/m². Der Versuch wurde abgebrochen.

### Beispiel 5 (Vergleichswert mit konventioneller SVE)

3,5 kg einer Pulvermischung, bestehend aus 7 Gew.-% PTFE-Pulver, 88 Gew.-% Silber-I-Oxid und 5 Gew.-% Silberpulver des Typs 331 der Fa. Ferro, wurden in einem Mischer der Fa. Eirich, Typ R02, ausgerüstet mit einem Sternwirbler als Mischelement, bei einer Drehzahl von 5000 U/min so gemischt, dass die dass die Temperatur der Pulvermischung 55 °C nicht übersteigt. Dies wurde dadurch erreicht, dass der Mischvorgang unterbrochen und die Mischtemperatur abgekühlt wurde. Insgesamt wurde das Mischen dreimal durchgeführt. Nach dem Mischen wurde die Pulvermischung mit einer Maschenweite von 1,0 mm gesiebt..

Die gesiebte Pulvermischung wurde anschließend auf ein Netz aus Nickeldrähten mit einer Drahtdicke von 0,14 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,5 kN/cm verpresst. Der Walzenpresse wurde die Gasdiffusionselektrode entnommen.

Die so hergestellte Sauerstoffverzehrkathode wurde bei der Elektrolyse einer Natriumchlorid-Lösung mit einer Ionenaustauschermembran von DuPONT N982WX und einem Natronlaugespalt zwischen SVE und Membran von 3mm eingesetzt. Die Zellspannung bei einer Stromdichte von 4 kA/m², einer Elektrolyttemperatur von 90° C, und einer Natronlauge-Konzentration von 32 Gew.-% betrug 2,05 V.

## Patentansprüche

1. Sauerstoffverzehrelektrode, mindestens aufweisend einen Träger in Form eines Flächengebildes und eine Beschichtung mit einer Gasdiffusionsschicht und einer katalytisch aktiven Komponente, **dadurch gekennzeichnet, dass** die Beschichtung mindestens ein fluorhaltiges Polymer, Silber als katalytisch aktive Komponente in Form von Silberpartikeln und/oder einer reduzierbaren Silberverbindung, und ein hydrophiles, elektrisch nicht oder schlecht leitendes, gegenüber Natronlauge von ca. 32 Gew.-% und gegenüber reinem Sauerstoff bei einer Temperatur von typischerweise 80 - 90 °C alkalilaugenbeständiges Füllmaterial mit einem mittleren Partikeldurchmesser im Bereich von 5 bis 200 µm enthält, wobei die elektrische Leitfähigkeit des alkalilaugenbeständigen Füllmaterials < 1000 S/cm beträgt und der Partikeldurchmesser mit Laserdiffraktion analog ISO 13320 bestimmt ist, wobei das fluorhaltige Polymer, die katalytisch aktive Komponente und das Füllmaterial als Gemisch vorliegen und wobei als Füllmaterial Zirkonoxid ausgewählt ist und der Anteil an Zirkonoxid als Füllmaterial maximal dem Anteil des Silbers entspricht.

2. Sauerstoffverzehrelektrode gemäß Anspruch 1, **dadurch gekennzeichnet, dass** die Beschichtung 0,5 bis 20 Gewichtsteile, bevorzugt 2 bis 10 Gewichtsteile des fluorhaltigen Polymers, 30 bis 90 Gewichtsteile, bevorzugt 30 bis 70 Gewichtsteile Silber in Form von Silberpartikeln und/oder einer reduzierbaren Silberverbindung, und 5 bis 60 Gewichtsteile, bevorzugt 15 bis 50 Gewichtsteile des hydrophilen, elektrisch nicht oder schlecht leitenden alkalilaugenbeständigen Füllmaterials umfasst.

3. Sauerstoffverzehrelektrode gemäß Anspruch 1 oder 2, **dadurch gekennzeichnet, dass** die elektrische Leitfähigkeit des alkalilaugenbeständigen Füllmaterials < 100 S/cm beträgt.

4. Sauerstoffverzehrelektrode gemäß einem der Ansprüche 1 bis 3, **dadurch gekennzeichnet, dass** der mittlere Partikeldurchmesser des Füllmaterials 10 bis 150 µm beträgt.

5. Sauerstoffverzehrelektrode gemäß einem der Ansprüche 1 bis 4, **dadurch gekennzeichnet, dass** der Feinanteil des Füllmaterials mit einem Partikeldurchmesser von < 10 µm höchstens 20 %, bevorzugt höchstens 20 %, besonders bevorzugt höchstens 5 % beträgt, wobei der Partikeldurchmesser mit Laserdiffraktion analog ISO 13320 bestimmt ist.

6. Sauerstoffverzehrelektrode gemäß einem der Ansprüche 1 bis 5, **dadurch gekennzeichnet, dass** der Feinanteil des Füllmaterials mit einem Partikeldurchmesser von < 1 µm höchstens 5 %, bevorzugt höchstens 2 %, besonders bevorzugt höchstens 1 % beträgt, wobei der Partikeldurchmesser mit Laserdiffraktion analog ISO 13320 bestimmt ist.

7. Verwendung der Sauerstoffverzehrelektrode nach einem der Ansprüche 1 bis 6 als Sauerstoff verzehrende Kathode in der Elektrolyse, insbesondere in der Chloralkalielektrolyse, oder als Elektrode in einer Brennstoffzelle oder als Elektrode in einer Metall/Luft-Batterie.

8. Elektrolysevorrichtung, insbesondere für die Chloralkalielektrolyse, aufweisend eine Sauerstoffverzehrelektrode nach einem der Ansprüche 1 bis 6 als Sauerstoff verzehrende Kathode.

## Claims

1. Oxygen-consuming electrode at least comprising a support in the form of a sheet-like structure and a coating having a gas diffusion layer and a catalytically active component, **characterized in that** the coating contains at least one fluorine-containing polymer, silver as catalytically active component in the form of silver particles and/or a reducible silver compound and a hydrophilic caustic alkali-resistant filler which is electronically nonconductive or has a poor electrical conductivity and is resistant to sodium hydroxide solution having a concentration of about 32% by weight and to pure oxygen at a temperature of typically 80-90°C and has an average particle diameter in the range from 5 to 200 µm, where the electrical conductivity of the caustic alkali-resistant filler is <1000 S/cm and the particle diameter is determined using laser light scattering in a manner analogous to ISO 13320 and the fluorine-containing polymer, the catalytically active component and the filler material are present as a mixture and zirconium oxide is selected as filler material and the proportion of zirconium oxide as filler material corresponds to not more than the proportion of silver.

2. Oxygen-consuming electrode according to Claim 1, **characterized in that** the coating comprises from 0.5 to 20 parts by weight, preferably from 2 to 10 parts by weight, of the fluorine-containing polymer, from 30 to 90 parts by weight, preferably from 30 to 70 parts by weight, of silver in the form of silver particles and/or a reducible silver compound and from 5 to 60 parts by weight, preferably from 15 to 50 parts by weight, of the hydrophilic caustic alkali-resistant filler which is electrically nonconductive or has a poor electrical conductivity.

3. Oxygen-consuming electrode according to Claim 1 or 2, **characterized in that** the electrical conductivity of the caustic alkali-resistant filler is < 100 S/cm.

4. Oxygen-consuming electrode according to any of Claims 1 to 3, **characterized in that** the average particle diameter of the filler is from 10 to 150 µm.

5. Oxygen-consuming electrode according to any of Claims 1 to 4, **characterized in that** the proportion of fines having a particle diameter of < 10 µm in the filler is not more than 20%, preferably not more than 20%, particularly preferably not more than 5% where the particle diameter is determined using laser light scattering in a manner analogous to ISO 13320.

6. Oxygen-consuming electrode according to any of Claims 1 to 5, **characterized in that** the proportion of fines having a particle diameter of < 1 µm in the filler is not more than 5%, preferably not more than 2%, particularly preferably not more than 1% where the particle diameter is determined using laser light scattering in a manner analogous to ISO 13320.

7. Use of the oxygen-consuming electrode according to any of Claims 1 to 6 as oxygen-consuming cathode in electrolysis, in particular in chloralkali electrolysis, or as electrode in a fuel cell or as electrode in a metal/air battery.

8. Electrolysis apparatus, in particular for chloralkali electrolysis, having an oxygen-consuming electrode according to any of Claims 1 to 6 as oxygen-consuming cathode.

## Revendications

1. Électrode consommant de l'oxygène, présentant au moins un support sous forme d'une structure plate et un revêtement présentant une couche de diffusion de gaz et un composant catalytiquement actif, **caractérisée en ce que** le revêtement contient au moins un polymère fluoré, de l'argent comme composant catalytiquement actif sous forme de particules d'argent et/ou d'un composé réductible de l'argent et un matériau de charge hydrophile, électriquement non ou peu conducteur, résistant à la lessive alcaline, à une lessive de soude caustique à environ 32% en poids et à l'oxygène pur à une température généralement de 80-90°C, présentant un diamètre moyen des particules dans la plage de 5 à 200 µm, la conductibilité électrique du matériau de charge résistant à la lessive alcaline étant < 1000 S/cm et le diamètre des particules étant déterminé par diffraction de rayon laser de manière analogue à la norme ISO 13320, le polymère fluoré, le composant catalytiquement actif et le matériau de charge se trouvant sous forme de mélange et l'oxyde de zirconium étant choisi comme matériau de charge et la proportion d'oxyde de zirconium en tant que matériau de charge correspondant au maximum à la proportion d'argent.

2. Électrode consommant de l'oxygène selon la revendication 1, **caractérisée en ce que** le revêtement comprend 0,5 à 20 parties en poids, de préférence 2 à 10 parties en poids du polymère fluoré, 30 à 90 parties en poids, de préférence 30 à 70 parties en poids, d'argent sous forme de particules d'argent et/ou d'un composé réductible de l'argent et 5 à 60 parties en poids, de préférence 15 à 50 parties en poids du matériau de charge hydrophile, électriquement non ou peu conducteur, résistant à la lessive alcaline.

3. Électrode consommant de l'oxygène selon la revendication 1 ou 2, **caractérisée en ce que** la conductibilité électrique du matériau de charge résistant à lessive alcaline est < 100 S/cm.

4. Électrode consommant de l'oxygène selon l'une quelconque des revendications 1 à 3, **caractérisée en ce que** le diamètre moyen des particules du matériau de charge est de 10 à 150 µm.

5. Électrode consommant de l'oxygène selon l'une quelconque des revendications 1 à 4, **caractérisée en ce que** la proportion de fines du matériau de charge, présentant un diamètre de particule < 10 µm, représente au plus 20%, de préférence au plus 20%, de manière particulièrement préférée au plus 5%, le diamètre de particule étant déterminé par diffraction de rayon laser de manière analogue à la norme ISO 13320.

6. Électrode consommant de l'oxygène selon l'une quelconque des revendications 1 à 5, **caractérisée en ce que** la proportion de fines du matériau de charge, présentant un diamètre de particule < 1 µm, représente au plus 5%, de préférence au plus 2%, de manière particulièrement préférée au plus 1%, le diamètre de particule étant déterminé par diffraction de rayon laser de manière analogue à la norme ISO 13320.

7. Utilisation de l'électrode consommant de l'oxygène selon l'une quelconque des revendications 1 à 6 comme cathode consommant de l'oxygène dans l'électrolyse, en particulier dans l'électrolyse alcaline du chlore, ou comme électrode dans une pile à combustible ou comme électrode dans une batterie métal/air.

8. Dispositif d'électrolyse, en particulier pour l'électrolyse alcaline du chlore, présentant une électrode consommant de l'oxygène selon l'une quelconque des revendications 1 à 6 comme cathode consommant de l'oxygène.
